# EUROPÄISCHE PATENTSCHRIFT

(11) **EP 2 904 301 B1**
(45) Veröffentlichungstag und Bekanntmachung des Hinweises auf die Patenterteilung: **08.11.2017**
(21) Anmeldenummer: 13795154.7
(22) Anmeldetag: 18.09.2013
(51) Int. Cl.: F16L 21/08, F16L 37/113

(54) **HALTERIEGEL FÜR EINE MUFFENROHRVERBINDUNG**
RETAINING CATCH FOR A SOCKET PIPE CONNECTION
VERROU DE MAINTIEN POUR UN RACCORD DE TUYAUTERIE AVEC MANCHON

(30) Priorität: 02.10.2012 AT 10652012
(43) Veröffentlichungstag der Anmeldung: 12.08.2015
(73) Patentinhaber: Duktus (Production) GmbH, 35576 Wetzlar (DE)
(72) Erfinder: ARNOLD, Georg, A-6075 Tulfes (AT)
(74) Vertreter: Patentanwälte Olbricht Buchhold Keulertz
(86) Internationale Anmeldenummer: PCT/EP2013/002802
(87) Internationale Veröffentlichungsnummer: WO 2014/053216

(56) Entgegenhaltungen:
- EP-A2- 1 046 854
- DE-A1-102006 031 582
- US-A- 4 033 613

## Beschreibung

Die Erfindung betrifft einen Halteriegel für eine Muffenrohrverbindung mit einem im Wesentlichen kreisbogenförmigen Riegelkörper, an dem ein vom Riegelkörper abstehender Vorsprung angeordnet ist, wobei der Vorsprung an einem Ende des Riegelkörpers in Richtung einer kreisbogenförmigen Längserstreckung des Riegelkörpers angeordnet ist, wobei der Riegelkörper in einer Querschnittsebene in radialer Richtung quer zu seiner kreisbogenförmigen Längserstreckung einen Riegelquerschnitt aufweist.

Derartige Halteriegel sind bereits bekannt und werden in Muffenrohrverbindungen für die Zugsicherung eingesetzt. So zeigt beispielsweise die EP 1 046 854 A2 den Einsatz von zwei gattungsgemäßen Halteriegeln für eine Muffenrohrverbindung von einem als Muffe ausgebildeten Rohrende eines ersten Rohres mit einem, in die Muffe einzuführenden, Rohrende bzw. Einsteckende eines zweiten Rohres. Das als Muffe ausgebildete Rohrende des ersten Rohres weist dabei üblicherweise einen radial nach innen ragenden, umlaufenden Begrenzungsbund auf, der in Umlaufrichtung eine oder mehrere Ausnehmungen aufweist, die in etwa der Längserstreckung eines Halteriegels entsprechen oder etwas größer sind, sodass die Halteriegel über die Ausnehmungen in die Muffenverbindung eingeführt werden können. Das in die Muffe einzuführende Rohrende des zweiten Rohres weist typischerweise einen umlaufenden Anlagebund auf, der beispielsweise als Schweißraupe ausgebildet ist.

Um nun eine Muffenrohrverbindung herzustellen, werden üblicherweise zunächst die Rohrteile (Muffe und Einsteckende) zusammengefügt. Anschließend werden beispielsweise zwei spiegelbildlich ausgebildete, bogenförmige Halteriegel über eine Ausnehmung des umlaufenden Begrenzungsbundes an der Muffe in das Innere der Muffe eingebracht, bis sie am Anlagebund am Einsteckende des zweiten Rohres anliegen und anschließend radial nach links bzw. rechts verschoben, bis jeweils ein Vorsprung des Halteriegels an einer Kante des Begrenzungsbundes anliegt. Um die Halteriegel in dieser Position zu halten, kann ein Abstandshalter - der aus einem flexiblen Kunststoff hergestellt sein kann - zwischen den Halteriegeln angeordnet werden. In Montageposition befinden sich die Halteriegel zwischen dem Begrenzungsbund der Muffe und dem Anlagebund des zweiten Rohres. Durch je einen Halteriegel auf der linken und auf der rechten Seite kann insgesamt eine gleichmäßige Sicherung gegen Zugkräfte erzielt werden.

Derartige Muffenrohrverbindungen von Rohren oder Rohrformstücken werden insbesondere bei Rohrsystemen im Trinkwasser- und Abwasserbereich eingesetzt. In solchen Rohrsystemen können die Rohre Betriebsdrücken bis zu 100 bar oder mehr ausgesetzt sein, wodurch auch hohe Längszugkräfte auf die Rohre einwirken können.

Die Rohre in derartigen Rohrsystemen weisen typischerweise Nennweiten von DN 80 bis DN 1000 auf. Die als Muffe ausgebildeten Rohrenden sind dabei üblicherweise mit einer umlaufenden Dichtungskammer und einer im Endbereich der Muffe ausgebildeten, umlaufenden Schubsicherungskammer ausgestattet. In der Dichtungskammer kann zur Abdichtung der Muffenrohrverbindung ein Dichtring angeordnet sein, der in Montagelage sowohl an der Innenwandung der Dichtungskammer als auch an der Außenwandung des in die Muffe eingeführten Rohrendes des zweiten Rohres dichtend anliegt. Die Schubsicherungskammer weist in Richtung des Muffenendes einen umlaufenden Begrenzungsbund auf, der eine umlaufende - schräg zur axialen Erstreckung der Muffe verlaufende - Schubfläche umfasst. In diesem Begrenzungsbund sind in Umfangsrichtung Ausnehmungen ausgebildet, um die Halteriegel in die Muffe einführen zu können. Das in die Muffe eingeführte Rohrende eines zweiten Rohres weist einen umlaufenden Anlagebund auf, an dem die Halteriegel in Montagelage anliegen.

Die Längszugsicherung erfolgt in solchen Muffenrohrverbindungen dadurch, dass einwirkende Längszugkräfte über den Anlagebund des zweiten Rohrendes auf die Halteriegel und in weitere Folge über den umlaufenden Begrenzungsbund bzw. dessen umlaufende Schubfläche in die Schubsicherungskammer der Muffe abgeleitet werden. Eine gattungsgemäße Muffenrohrverbindung ist je nach Nennweite der Rohre für Betriebsdrücke von über 100 bar oder zulässige Zugkräfte von bis zu 200 kN geeignet.

Für eine optimale Zugsicherung bei möglichst geringer Bauteilbelastung sind die Biegeradien der Rohre und der Halteriegel bestmöglich angeglichen. Im Idealfall entspricht der Rohraußenradius des in die Muffe einzubringenden Rohrendes im Wesentlichen dem Riegelinnenradius eines Halteriegels und der Riegelaußenradius eines Halteriegels bzw. dessen Außenfläche im Wesentlichen dem Innenradius des Begrenzungsbundes bzw. dessen Schubfläche.

Da die zu verbindenden Rohre bzw. Rohrformstücke jedoch Fertigungstoleranzen unterworfen sind, können durch die abweichenden Biegeradien der Bauteile in Montagelage starke Biegekräfte auf die Halteriegel einwirken, die im Extremfall sogar bis zum Bruch eines Halteriegels führen können. Insbesondere Rohre bzw. Muffenrohre aus duktilem Gusseisen - die häufig bei Rohrsystemen im Trinkwasser- und Abwasserbereich eingesetzt werden - weisen aufgrund ihrer Herstellung durch ein Schleudergussverfahren mit einer formgebenden rotierenden Kokille entsprechende Fertigungsschwankungen auf.

Aufgabe der Erfindung ist es, die vorbeschriebenen Nachteile zu vermeiden und einen gegenüber dem Stand der Technik verbesserten Halteriegel anzugeben. Insbesondere soll der Halteriegel robuster gegenüber Fertigungsschwankungen der Bestandteile einer Muffenrohrverbindung sein.

Diese Aufgabe wird erfindungsgemäß durch die Merkmale des Patentanspruchs 1 gelöst. Vorteilhafte Ausgestaltungen der Erfindung sind in den abhängigen Patentansprüchen angegeben.

Gemäß der Erfindung ist also vorgesehen, dass der Riegelkörper einen Biegeabschnitt aufweist, wobei der Riegelkörper entlang des Biegeabschnitts einen - in radialer Richtung gesehen - gegenüber dem Riegelquerschnitt verringerten Minderquerschnitt aufweist.

Durch das Vorsehen eines verminderten Querschnittes des Riegelkörpers im Bereich eines Biegeabschnitts kann der Halteriegel auf ihn einwirkende Biegekräfte gut aufnehmen, da der Halteriegel im Bereich des Biegeabschnitts im Wesentlichen in der Art eines Filmscharniers biegbar ist.

Diese Biegbarkeit ist insbesondere dann von Vorteil, wenn der Halteriegel zumindest teilweise, vorzugsweise im Wesentlichen vollständig, aus einem Kunststoff besteht. Da ein Halteriegel in Montageposition als Verbindungselement zwischen den beiden zu verbindenden Rohren auftritt, ist der Einsatz eines Halteriegels aus Kunststoff besonders dann von Vorteil oder nötig, wo die Unterbrechung der elektrischen Leitfähigkeit der zu verbindenden Rohre gefordert wird. Dieses ist insbesondere in Einbausituationen der Fall, bei denen ohne eine solche Unterbrechung der elektrischen Leitfähigkeit unerwünschte Kriechströme auftreten können, beispielsweise wenn es sich bei den zu verbindenden Rohren um Wasserrohre handelt, die im Bereich von Straßenbahnschienen im Boden verlegt sind.

Wo hingegen herkömmliche Halteriegel aus duktilem Gusseisen aufgrund ihres Materials eine verhältnismäßig hohe Dehnbarkeit aufweisen, ist insbesondere aufgrund der geringeren Dehnbarkeit des eingesetzten Materials bei Halteriegeln aus Kunststoff eine erhöhte Biegbarkeit des Halteriegels durch einen Biegeabschnitt mit einem verminderten Querschnitt von Vorteil. Durch die erhöhte Biegbarkeit des Halteriegels aufgrund des Biegeabschnitts mit dem verminderten Riegelquerschnitt können auch sehr druckfeste Kunststoffe als Material für den Halteriegel verwendet werden, die oftmals sehr spröde sind. Häufig handelt es sich hierbei um mit mindestens 40 % Glasfaser verstärkte Werkstoffe, die auch unter stetiger Druckbelastung keine großen Kriecheigenschaften aufweisen. Darüber hinaus können Halteriegel aus Kunststoff im Vergleich zu Halteriegeln aus Gusseisen kostengünstiger hergestellt werden, insbesondere Halteriegel für Rohrleitungen bis etwa 16 bar Betriebsdruck.

Als Kunststoffmaterialen für die Halteriegel eigenen sich beispielsweise die glasfaserverstärkten Kunststoffe SCANAMID 6 B12^ F45 von Polykemi AB oder Grivory XE 5041 von EMS-Grivory. Insbesondere bei der Verwendung von spröden und/oder druckfesten Kunststoffen kann durch den Biegeabschnitt die Dehnung des restlichen Riegelkörpers durch vorhandene Radiusunterschiede von Muffe des ersten Rohres und Einsteckende des zweiten Rohres soweit in Grenzen gehalten werden, dass in Montageposition unter Druck keine Risse im Bereich des Riegelinnenradius am Halteriegel auftreten.

Gemäß einer bevorzugten Ausführungsform der Erfindung kann vorgesehen sein, dass der Minderquerschnitt 50 % bis 80 %, vorzugsweise 60 % bis 70 %, besonders bevorzugt etwa 66 %, des Riegelquerschnitts beträgt. Vorzugsweise kann vorgesehen sein, dass eine Länge des Biegeabschnitts mindestens 10 %, vorzugsweise mindestens 15 %, der Längserstreckung des Riegelkörpers beträgt. Um den Halteriegel beim Einsatz in eine Muffenrohrverbindung in eine geeignete Endposition bringen zu können, ist vorgesehen, dass am Riegelkörper ein Vorsprung angeordnet ist, wobei der Vorsprung vom Riegelkörper absteht, vorzugsweise in einer Richtung senkrecht zur Kreisebene des kreisbogenförmigen Riegelkörpers.

Als besonders vorteilhaft hat es sich dabei herausgestellt, wenn der Biegeabschnitt im Bereich des Vorsprungs angeordnet ist. Dies ist insbesondere dann vorteilhaft, wenn das Einsteckende des zweiten Rohres einen Rohraußenradius aufweist, der größer ist als der Riegelinnenradius des Halteriegels. In einem solchen Fall sind insbesondere die Enden des Halteriegels starken Belastungen ausgesetzt, da sie die Anpressstellen einer Aufbiegung des Halteriegels darstellen, wobei die Aufbiegung ein Aufweiten des Riegelinnenradius des Halteriegels in Richtung des Rohraußenradius des Einsteckendes bewirkt.

Besonders vorteilhaft ist jene Ausführungsform der Erfindung, bei der ein Übergang vom Riegelquerschnitt auf den Minderquerschnitt entlang der Längserstreckung im Wesentlichen bogenförmig ausgebildet ist. Bei einem solchermaßen nicht abrupt sondern im Wesentlichen kontinuierlich ausgeführten Übergang kann die Bruchfestigkeit der Übergangsstelle erhöht werden.

Schutz wird auch begehrt für eine Muffenrohrverbindung gemäß Anspruch 9, umfassend
- ein als Muffe ausgebildetes erstes Rohrende eines ersten Rohres, wobei die Muffe im Inneren zumindest bereichsweise einen radial nach innen ragenden umlaufenden Begrenzungsbund aufweist,
- ein in die Muffe einzuführendes zweites Rohrende eines zweiten Rohres, wobei das zweite Rohrende zumindest bereichsweise einen umlaufenden Anlagebund aufweist,
- wenigstens einen Halteriegel nach einem der Ansprüche 1 bis 8, wobei der Halteriegel zwischen dem Begrenzungsbund und dem Anlagebund angeordnet ist.

In einer bevorzugten Ausführungsform kann wenigstens eine Klemmvorrichtung umfassend einen ersten Halteriegel, einen spiegelbildlich zum ersten Halteriegel ausgebildeten zweiten Halteriegel und einen Abstandshalter vorgesehen sein, wobei in Montageposition der Abstandshalter in Umfangsrichtung bezüglich der Kreisebene der bogenförmigen Halteriegel zwischen dem ersten Halteriegel und dem zweiten Halteriegel angeordnet ist, vorzugsweise zwischen einander zugewandten Vorsprüngen der beiden Halteriegel.

Bei größeren Rohrdurchmessern, beispielsweise bei Nennweiten ab DN 300 bis DN 500, können auch mehrere Klemmvorrichtungen vorgesehen sein. So können beispielsweise zwei Klemmvorrichtungen für eine Muffenrohrverbindung vorgesehen sein, die somit insgesamt zwei gleichartige erste Halteriegel und zwei gleichartige, zu den ersten Halteriegeln spiegelbildlich ausgebildete, zweite Halteriegel umfassen.

Weitere Einzelheiten und Vorteile der vorliegenden Erfindung werden anhand der nachfolgenden Figurenbeschreibung erläutert. Dabei zeigt bzw. zeigen:
- Fig. 1a: eine Draufsicht auf einen vorgeschlagenen Halteriegel in Bezug auf eine Kreisebene des Halteriegels,
- Fig. 1b: eine Querschnittsdarstellung des Halteriegels der Figur 1a gemäß der radialen Schnittebene A-A in Figur 1a,
- Fig. 1c: eine Querschnittsdarstellung im Bereich des Biegeabschnitts des Halteriegels der Figur 1a gemäß der radialen Schnittebene B-B in Figur 1a,
- Fig. 2: eine Seitenansicht eines Halteriegels gemäß einer weiteren Ausführungsform der Erfindung,
- Fig. 3a: eine perspektivische Ansicht des Halteriegels der Figur 2,
- Fig. 3b: eine weitere perspektivische Ansicht des Halteriegels der Figur 2,
- Fig. 4: eine vorgeschlagene Muffenrohrverbindung während des Zusammenbauens,
- Fig. 5: eine vorgeschlagene Muffenrohrverbindung in teilweise aufgebrochener Darstellung,
- Fig. 6a: eine Frontansicht entlang der Rohrachse auf eine vorgeschlagene Muffenrohrverbindung und
- Fig. 6b: eine vergrößerte Detaildarstellung eines Bereichs der Fig. 6a.

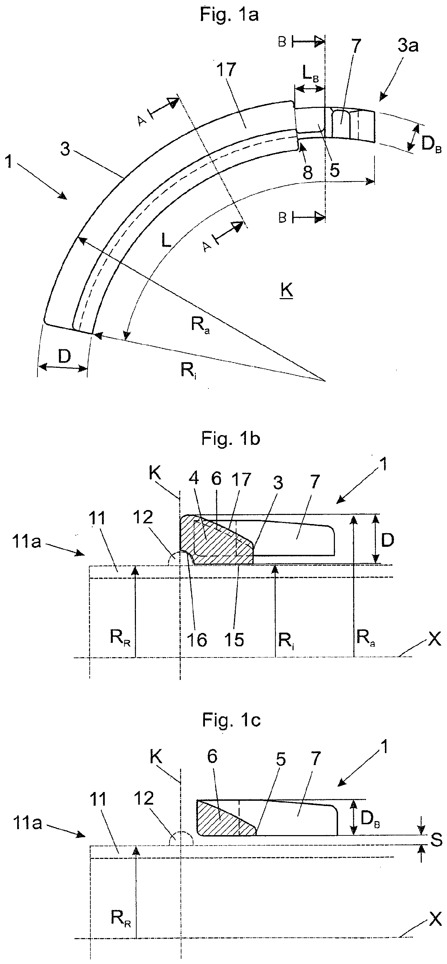

Fig. 1a zeigt eine Draufsicht auf einen vorgeschlagenen Halteriegel 1 mit Blickrichtung auf eine Kreisebene K des Halteriegels 1. Der Halteriegel 1 weist einen kreisbogenförmigen Riegelkörper 3 auf, wobei der Riegelkörper 3 in radialer Richtung einen inneren Riegelinnenradius Rᵢ und einen äußeren Riegelaußenradius Rₐ aufweist. Der Riegelkörper 3 weist entlang seiner bogenförmigen Erstreckung eine Längserstreckung L auf. An einem Ende 3a des Riegelkörpers 3 ist ein im Wesentlichen senkrecht zur Kreisebene sich erstreckender Vorsprung 7 angeordnet. Im Bereich des Vorsprungs 7 weist der Riegelkörper 3 einen Biegeabschnitt 5 auf, der einen - in radialer Richtung gesehen - gegenüber dem Riegelquerschnitt 4 (siehe Fig. 1b) verringerten Minderquerschnitt 6 (siehe Fig. 1c) aufweist. Der Übergang 8 vom Riegelquerschnitt 4 auf den Minderquerschnitt 6 ist dabei bogenförmig bzw. abgerundet ausgebildet, wodurch die Bruchfestigkeit der Übergangsstelle erhöht werden kann. Entlang der bogenförmigen Erstreckung des Riegelkörpers 3 weist der Biegeabschnitt 5 eine Länge L_{B} auf. In radialer Richtung betrachtet kann die Dicke D des Riegelkörpers 3 an seiner breitesten Stelle beispielsweise 24 mm betragen, wohingegen die radiale Dicke D_{B} des Biegeabschnitts 5 an seiner breitesten Stelle beispielsweise 16 mm betragen kann.

Fig. 1b zeigt eine Querschnittsdarstellung des Halteriegels 1 der Fig. 1a gemäß der radialen Schnittebene A-A in Fig. 1a. In dieser Darstellung ist zusätzlich noch strichliert das Rohrende 11a eines zweiten Rohres 11 angedeutet, das in Bezug auf seine Rohrachse X einen umlaufenden Anlagebund 12 in Form einer Schweißraupe aufweist. Der Riegelkörper 3 weist einen Riegelquerschnitt 4 und eine an die Kontur des Anlagebundes 12 angepasste Bundanlagefläche 16 auf, sodass der Halteriegel 1 im Wesentlichen formschlüssig an den Anlagebund 12 angelegt werden kann. Das zweite Rohr 11 weist einen Rohraußenradius R_{R} auf. Die Kreisebene K des Halteriegels 1 steht im Wesentlichen senkrecht zur Rohrachse X und der Riegelinnenradius Rᵢ entspricht in etwa dem Rohraußenradius R_{R} des zweiten Rohres 11, sodass der Halteriegel 1 mit seiner Rohranlagefläche 15 im Wesentlichen formschlüssig an die äußere Mantelfläche des zweiten Rohres 11 angelegt werden kann. In dieser Darstellung ist bereits strichliert der Minderquerschnitt 6 des Biegeabschnitts 5 angedeutet. In dieser Abbildung nicht dargestellt ist die den Halteriegel 1 umgebende Muffe 9a des ersten Rohres 9 einer Muffenrohrverbindung 2. Eine solche Muffe 9a weist üblicherweise am Muffenende einen umlaufenden Begrenzungsbund 10 auf, der eine schräg zur axialen Erstreckung der Muffe 9a bzw. der Rohrachse X verlaufende, umlaufende Schubfläche 10a aufweist. In Montageposition liegt die gleichermaßen schräg zur Rohrachse X und entsprechend der bogenförmigen Ausgestaltung des Riegelkörpers 3 verlaufende Muffenanlagefläche 17 des Riegelkörpers 3 an dieser Schubfläche 10a der Muffe 9a an. Eine Längszugsicherung kann dabei dadurch erfolgen, dass einwirkende Längszugkräfte über den Anlagebund 12 des zweiten Rohrendes 11a auf die Halteriegel 1 und in weitere Folge über den umlaufenden Begrenzungsbund 10 bzw. dessen umlaufende Schubfläche 10a in die Schubsicherungskammer der Muffe 9a abgeleitet werden.

Fig. 1c zeigt eine Querschnittsdarstellung im Bereich des Biegeabschnitts 5 des Halteriegels 1 der Fig. 1a gemäß der radialen Schnittebene B-B in Fig. 1a. Der Halteriegel 1 befindet sich wie in Fig. 1b in Montagelage, wobei ebenfalls das Rohrende 11a des zweiten Rohres 11 in Montagelage strichliert angedeutet ist. Wie im Vergleich mit Fig. 1b zu erkennen ist, weist der Halteriegel 1 im Bereich des Biegeabschnitts 5 einen gegenüber dem Riegelquerschnitt 4 verringerten Minderquerschnitt 6 auf. Auch liegt der Biegeabschnitt 5 sowie der Vorsprung 7 im Gegensatz zum restlichen Riegelkörper 3 nicht am Außenmantel des zweiten Rohres 11 an. Durch den Minderquerschnitt 6 des Biegeabschnitts 5 und das gegebene radiale Spiel S von beispielsweise etwa 1 mm bis etwa 4 mm zwischen Biegeabschnitt 5 bzw. Vorsprung 7 und dem Außenmantel des zweiten Rohres 11 lässt sich der Biegeabschnitt 5 in der Art eines Filmscharniers verbiegen, um den Halteriegel 1 trotz vorherrschender Toleranzschwankungen bezüglich des Rohraußenradius R_{R} des zweiten Rohres 11 an das zweite Rohr 11 anzulegen.

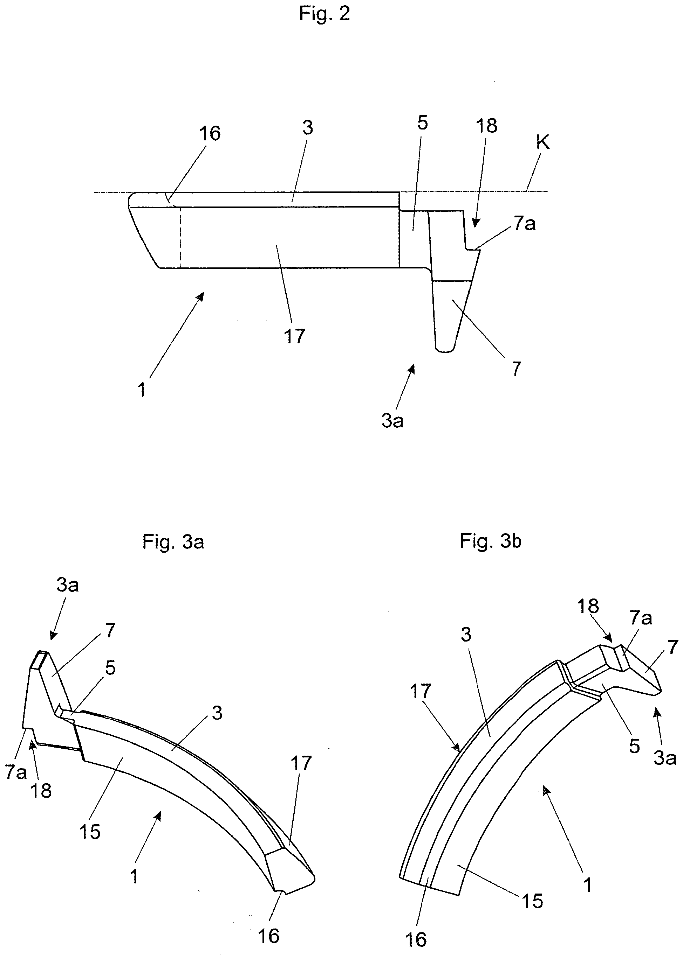

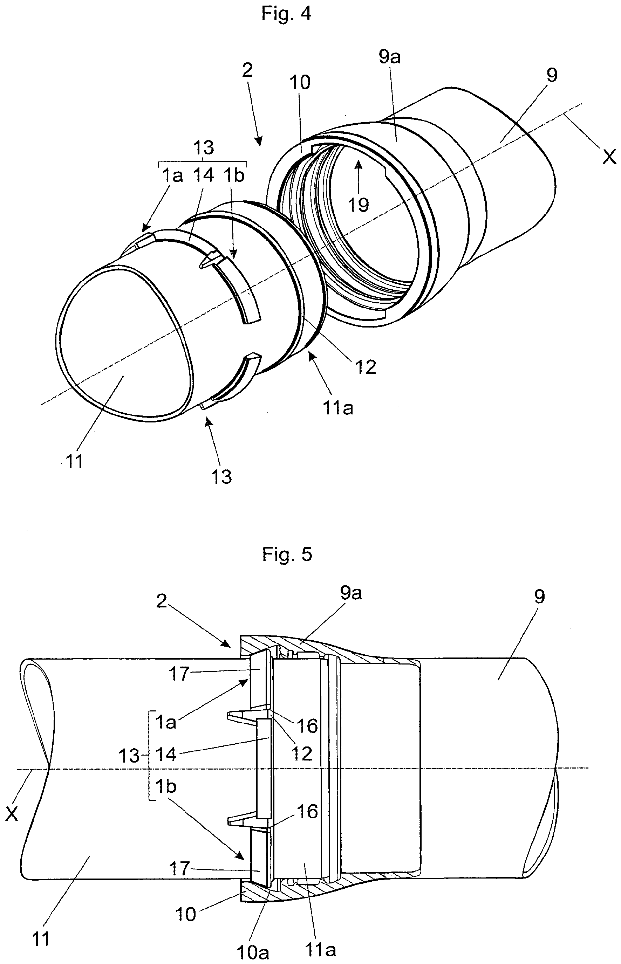

Fig. 2 zeigt eine Seitenansicht eines Halteriegels 1 gemäß einer weiteren Ausführungsform der Erfindung mit Blickrichtung auf die radial gesehen äußere Muffenanlagefläche 17 des Riegelkörpers 3 und Fig. 3a und 3b zeigen perspektivische Ansichten des Halteriegels der Fig. 2. In Montageposition liegt die in Bezug auf die Rohrachse X schräge Muffenanlagefläche 17 an einer hier nicht dargestellten umlaufenden Schubfläche 10a eines umlaufenden Begrenzungsbundes 10 eines als Muffe 9a ausgebildeten ersten Rohrendes eines ersten Rohres 9 an. Strichliert angedeutet ist die in dieser Blickrichtung verdeckte Bundanlagefläche 16, die entsprechend der Ausformung eines Anlagebunds 12 am Rohrende 11a des zweiten Rohres 11 ausgebildet ist (siehe Fig. 1b). Der am Ende 3a des Riegelkörpers 3 ausgebildete Vorsprung 7 weist eine Ausnehmung 18 sowie eine Nase 7a auf, wodurch im Rahmen einer Muffenrohrverbindung 2 mit einem zweiten - spiegelbildlich zu einem ersten Halteriegel 1a ausgebildeten - Halteriegel 1b zwischen den Ausnehmungen 18 der beiden Halteriegel 1a, 1b ein Abstandshalter 14 angeordnet und in Position gehalten werden kann (siehe Fig. 4).

Fig. 4 zeigt eine Muffenrohrverbindung 2 während des Zusammenbauens in einer perspektivischen Ansicht. Die Muffenrohrverbindung 2 umfasst in diesem Beispiel ein als Muffe 9a ausgebildetes Rohrende eines ersten Rohres 9, ein in die Muffe 9a einzuführendes zweites Rohrende 11a eines zweiten Rohres 11 und insgesamt zwei Klemmvorrichtungen 13. Eine Klemmvorrichtung 13 besteht dabei aus einem ersten Halteriegel 1a, einem spiegelbildlich zum ersten Halteriegel 1a ausgebildeten zweiten Halteriegel 1b sowie einem zwischen den Halteriegeln 1a, 1b anzuordnenden Abstandshalter 14.

Zum Herstellen der Muffenrohrverbindung 2 wird in bekannter Art und Weise das Rohrende 11a des zweiten Rohres 11 in das als Muffe 9a ausgebildete Rohrende des ersten Rohres 9 eingeführt, bis es stirnseitig an einem entsprechenden Anschlag innerhalb der Muffe 9a anliegt. Durch die Bundausnehmungen 19 am Begrenzungsbund 10 der Muffe 9a können in weiterer Folge zwei spiegelbildlich zueinander ausgebildete Halteriegel 1a, 1b nacheinander in die Muffe 9a eingeführt werden, bis ihre jeweilige Bundanlagefläche 16 am Anlagebund 12 des Rohrendes 11a anliegt. Der erste Halteriegel 1a wird dann bezüglich seiner Einführrichtung entgegen dem Uhrzeigersinn entlang des Anlagebunds 12 verschoben, bis sein Vorsprung 7 an einem Ende der Bundausnehmung 19 am Begrenzungsbund 10 anliegt. Ebenso wird nach seinem Einführen der zweite Halteriegel 1b bezüglich seiner Einführrichtung im Uhrzeigersinn entlang des Anlagebundes 12 verschoben, bis sein Vorsprung 7 am anderen Ende der Bundausnehmung 19 am Begrenzungsbund 10 anliegt. Zwischen den Vorsprüngen 7 der beiden Halteriegel 1a, 1b wird in weiterer Folge ein Abstandshalter 14 angeordnet, um die Halteriegel 1a, 1b lagestabil zu fixieren.

Im gezeigten Beispiel sind insgesamt zwei Klemmvorrichtungen 13 für die Muffenrohrverbindung 2 vorgesehen. Je nach Rohrdurchmesser können auch nur eine oder mehr als zwei solche Klemmvorrichtungen 13 entlang des Umfangs einer Muffenrohrverbindung 2 angeordnet werden.

Fig. 5 zeigt eine Seitenansicht der Muffenrohrverbindung 2 der Fig. 4, wobei die Muffe 9a des ersten Rohres 9 teilweise aufgebrochen ist. Entlang der Rohrachse X einwirkende Zugkräfte können bei einer solchen Muffenrohrverbindung 2 über den Anlagebund 12 des zweiten Rohres 11, die am Anlagebund 12 anliegende Bundanlagefläche 16 der Halteriegel 1a, 1b, die Muffenanlagefläche 17 der Halteriegel 1a, 1b sowie die bei einer Zugwirkung daran anliegende Schubfläche 10a der Muffe 9a des ersten Rohres 9 in die Muffe 9a abgeleitet werden.

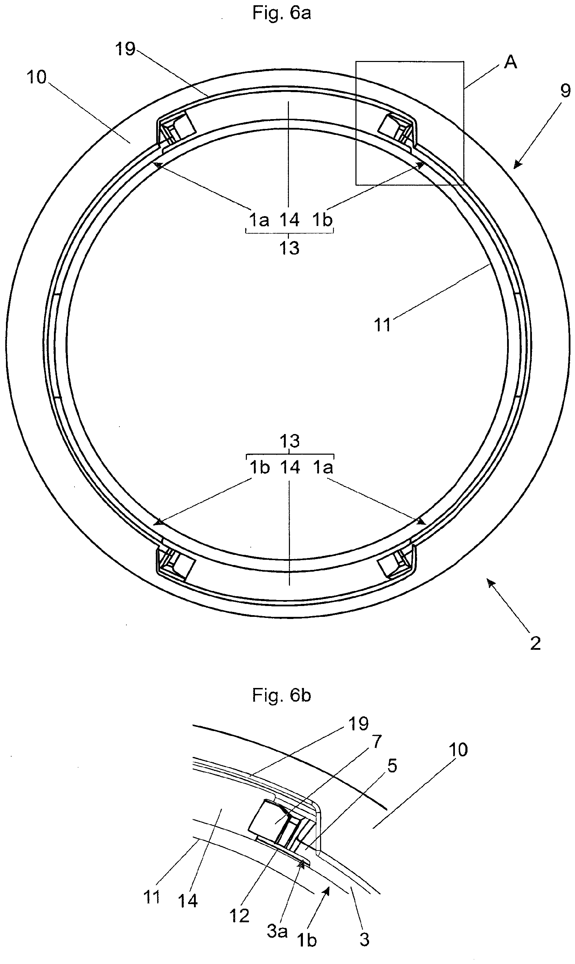

Fig. 6a zeigt eine Frontansicht der verbundenen Muffenrohrverbindung 2 gemäß Fig. 4 in einer Blickrichtung entlang der Rohrachse X und Fig. 6b zeigt eine vergrößerte Detaildarstellung des markierten Bereichs A der Fig. 6a. Durch den Biegeabschnitt 5 mit seinem gegenüber dem Riegelquerschnitt 4 verminderten Minderquerschnitt 6 im Bereich des Endes 3a des Riegelkörpers 3 eines Halteriegels 1a, 1b ist der jeweilige Riegelkörper 3 in der Art eines Filmscharniers verbiegbar. Dadurch können insbesondere auf die Halteriegel 1a, 1b einwirkende Biegekräfte aufgrund von Fertigungsschwankungen der Bauteile der Muffenrohrverbindung 2 - insbesondere schwankende Riegelinnenradius Rᵢ eines Halteriegels 1a, 1b, Rohraußenradius R_{R} des zweiten Rohres 11, Muffenanlagefläche 17 eines Halteriegels 1a, 1b und Schubfläche 10a der Muffe 9a - gut aufgenommen werden.

## Patentansprüche

1. Halteriegel (1) für eine Muffenrohrverbindung (2) mit einem im Wesentlichen kreisbogenförmigen Riegelkörper (3), an dem ein vom Riegelkörper (3) abstehender Vorsprung (7) angeordnet ist, wobei der Vorsprung (7) an einem Ende (3a) des Riegelkörpers (3) in Richtung einer kreisbogenförmigen Längserstreckung (L) des Riegelkörpers (3) angeordnet ist, wobei der Riegelkörper (3) in einer Querschnittsebene in radialer Richtung quer zu seiner kreisbogenförmigen Längserstreckung (L) einen Riegelquerschnitt (4) aufweist, **dadurch gekennzeichnet, dass** der Riegelkörper (3) einen Biegeabschnitt (5) aufweist, wobei der Riegelkörper (3) entlang des Biegeabschnitts (5) einen - in radialer Richtung gesehen - gegenüber dem Riegelquerschnitt (4) verringerten Minderquerschnitt (6) aufweist.

2. Halteriegel nach Anspruch 1, **dadurch gekennzeichnet, dass** der Minderquerschnitt (6) 50 % bis 80 %, vorzugsweise 60 % bis 70 %, besonders bevorzugt etwa 66 %, des Riegelquerschnitts (4) beträgt.

3. Halteriegel nach Anspruch 1 oder 2, **dadurch gekennzeichnet, dass** eine Länge (L_{B}) des Biegeabschnitts (5) mindestens 10 %, vorzugsweise mindestens 15 %, der Längserstreckung (L) des Riegelkörpers (3) beträgt.

4. Halteriegel nach einem der Ansprüche 1 bis 3, **dadurch gekennzeichnet, dass** der Vorsprung (7) in einer Richtung senkrecht zur Kreisebene (K) des kreisbogenförmigen Riegelkörpers (3) vom Riegelkörper (3) absteht.

5. Halteriegel nach einem der Ansprüche 1 bis 4, **dadurch gekennzeichnet, dass** der Biegeabschnitt (5) im Bereich des Vorsprungs (7) angeordnet ist.

6. Halteriegel nach einem der Ansprüche 1 bis 5, **dadurch gekennzeichnet, dass** ein Übergang (8) vom Riegelquerschnitt (4) auf den Minderquerschnitt (6) entlang der Längserstreckung (L) im Wesentlichen bogenförmig ausgebildet ist.

7. Halteriegel nach einem der Ansprüche 1 bis 6, **dadurch gekennzeichnet, dass** der Halteriegel (1) zumindest teilweise, vorzugsweise im Wesentlichen vollständig, aus einem Kunststoff besteht.

8. Muffenrohrverbindung (2) umfassend
- ein als Muffe (9a) ausgebildetes erstes Rohrende eines ersten Rohres (9), wobei die Muffe (9a) im Inneren zumindest bereichsweise einen radial nach innen ragenden umlaufenden Begrenzungsbund (10) aufweist,
- ein in die Muffe (9a) einzuführendes zweites Rohrende (11a) eines zweiten Rohres (11), wobei das zweite Rohrende (11a) zumindest bereichsweise einen umlaufenden Anlagebund (12) aufweist,
- wenigstens einen Halteriegel (1) nach einem der Ansprüche 1 bis 7, wobei der Halteriegel (1) zwischen dem Begrenzungsbund (10) und dem Anlagebund (12) angeordnet ist.

9. Muffenrohrverbindung nach Anspruch 8, **dadurch gekennzeichnet, dass** wenigstens eine Klemmvorrichtung (13) umfassend einen ersten Halteriegel (1a), einen spiegelbildlich zum ersten Halteriegel (1a) ausgebildeten zweiten Halteriegel (1b) sowie einen Abstandshalter (14) vorgesehen ist, wobei in Montageposition der Abstandshalter (14) in Umfangsrichtung bezüglich der Kreisebene der bogenförmigen Halteriegel (1a, 1b) zwischen dem ersten Halteriegel (1a) und dem zweiten Halteriegel (1b) angeordnet ist, vorzugsweise zwischen einander zugewandten Vorsprüngen (7) der beiden Halteriegel (1a, 1b).

## Claims

1. Retaining catch (1) for a socket pipe connection (2) having a substantially circular arc-shaped catch body (3), on which is arranged a protrusion (7) which projects from the catch body (3), wherein the projection (7) is arranged on one end (3a) of the catch body (3) in the direction of a circular arc-shaped longitudinal extent (L) of the catch body (3), wherein the catch body (3) has a catch cross-section (4) in a cross-sectional plane as seen radially in a direction transverse to its circular arc-shaped longitudinal extent (L) **characterised in that** the catch body (3) has a bending portion (5), wherein the catch body (3), along the bending portion (5), has a reduced cross-section (6) which is reduced in size-as seen radially-in relation to the catch cross-section (4).

2. Retaining catch according to claim 1, **characterised in that** the reduced cross-section (6) is between 50 % and 80 %, preferably between 60 % and 70 % and most preferably approximately 66 % of the catch cross-section (4).

3. Retaining catch according to claim 1 or 2, **characterised in that** a length (LB) of the bending portion (5) is at least 10 %, preferably at least 15 %, of the longitudinal extent (L) of the catch body (3).

4. Retaining catch according to any one of claims 1 to 3, **characterised in that** the projection (7) projects from the catch body (3) in a direction perpendicular to the circular plane (K) of the circular arc-shaped catch body (3).

5. Retaining catch according to any one of claims 1 to 4, **characterised in that** the bending portion (5) is arranged in the region of the projection (7).

6. Retaining catch according to any one of claims 1 to 5, **characterised in that** a transition (8) from the catch cross-section (4) to the reduced cross-section (6) along the longitudinal extent (L) is substantially arc-shaped.

7. Retaining catch according to any one of claims 1 to 6, **characterised in that** the retaining catch (1) at least partially and preferably substantially completely comprises a plastic material.

8. Socket pipe connection (2) comprising
- a first pipe end of a first pipe (9) configured as a socket (9a), wherein in the interior the socket (9a) has at least region-wise a radially inwardly projecting peripherally extending limiting collar (10),
- a second pipe end (11a) of a second pipe (11), that is to be introduced into the socket (9a), wherein the second pipe end (11a) at least region-wise has a peripherally extending contact collar (12),
- at least one retaining catch (1) according to any one of claims 1 to 7, wherein the retaining catch (1) is arranged between the limiting collar (10) and the contact collar (12).

9. Socket pipe connection according to claim 8, **characterised in that** at least one clamping device (13) comprising a first retaining catch (1a), a second retaining catch (1b) provided in mirror-image relationship with the first retaining catch (1a) and a spacer (14), wherein in the assembled position the spacer (14) is arranged in the peripheral direction relative to the circular plane of the arc-shaped retaining catches (1a, 1b) between the first retaining catch (1a) and the second retaining catch (1b), preferably between mutually facing projections (7) of the two retaining catches (1a, 1b).

## Revendications

1. Verrou de maintien (1) destiné à un raccord de tuyau à manchon (2), avec un corps de verrou (3) qui est globalement en forme d'arc de cercle et sur lequel est agencée une partie en saillie (7) s'éloignant du corps de verrou (3),
dans lequel la partie en saillie (7) est agencée au niveau d'une extrémité (3a) du corps de verrou (3) en direction d'une extension longitudinale (L), en forme d'arc de cercle, du corps de verrou (3)
et dans lequel le corps de verrou (3) présente dans un plan de section transversale et en direction radiale transversalement par rapport à son extension longitudinale (L) en forme d'arc de cercle une section transversale de verrou (4),
**caractérisé en ce que** le corps de verrou (3) comporte un tronçon de flexion (5), le corps de verrou (3) présentant le long du tronçon de flexion (5) une section transversale réduite (6) qui est réduite - vue dans la direction radiale par rapport à la section transversale de verrou (4).

2. Verrou de maintien selon la revendication 1, **caractérisé en ce que** la section transversale réduite (6) est égale à 50 % à 80 %, de préférence à 60 % à 70 %, de manière particulièrement préférée à 66 % environ, de la section transversale de verrou (4).

3. Verrou de maintien selon la revendication 1 ou 2, **caractérisé en ce qu'**une longueur (L_{B}) du tronçon de flexion (5) est égale à au moins 10 %, de préférence au moins 15 %, de l'extension longitudinale (L) du corps de verrou (3).

4. Verrou de maintien selon l'une des revendications 1 à 3, **caractérisé en ce que** la partie en saillie (7) s'éloigne du corps de verrou (3) dans une direction perpendiculaire au plan de cercle (K) du corps de verrou (3) en forme d'arc de cercle.

5. Verrou de maintien selon l'une des revendications 1 à 4, **caractérisé en ce que** le tronçon de flexion (5) est agencé dans la zone de la partie en saillie (7).

6. Verrou de maintien selon l'une des revendications 1 à 5, **caractérisé en ce qu'**une transition (8) de la section transversale de verrou (4) à la section transversale réduite (6) le long de l'extension longitudinale (L) est globalement en forme d'arc.

7. Verrou de maintien selon l'une des revendications 1 à 6, **caractérisé en ce que** le verrou de maintien (1) est, au moins partiellement et de préférence sensiblement entièrement, en plastique.

8. Raccord de tuyau à manchon (2) comprenant
- une première extrémité de tuyau, conçue comme un manchon (9a), d'un premier tuyau (9), le manchon (9a) comportant à l'intérieur au moins par endroits un collet de limitation (10) périphérique qui s'avance de façon radiale vers l'intérieur,
- une deuxième extrémité de tuyau (11a), à introduire dans le manchon (9a), d'un deuxième tuyau (11), la deuxième extrémité de tuyau (11a) comportant au moins par endroits un collet d'appui (12) périphérique,
- au moins un verrou de maintien (1) selon l'une des revendications 1 à 7, le verrou de maintien (1) étant agencé entre le collet de limitation (10) et le collet d'appui (12).

9. Raccord de tuyau à manchon selon la revendication 8, **caractérisé en ce qu'**au moins un dispositif de serrage (13) comprenant un premier verrou de maintien (1a), un deuxième verrou de maintien (1b) conçu de manière symétrique par rapport au premier verrou de maintien (1a) et un élément d'écartement (14), l'élément d'écartement (14) dans la position de montage étant agencé, dans la direction périphérique par rapport au plan de cercle des verrous de maintien (1a, 1b) en forme d'arc de cercle, entre le premier verrou de maintien (1a) et le deuxième verrou de maintien (1b), de préférence entre des parties en saillie (7), dirigées l'une vers l'autre, des deux verrous de maintien (1a, 1b).
